Europäisches Patentamt

European Patent Office

Office européen des brevets

(19)

(11) Numéro de publication: **0 153 539**
**B1**

(12)

# FASCICULE DE BREVET EUROPÉEN

(45) Date de publication du fascicule du brevet:
**10.08.88**

(51) Int. Cl.⁴: **F 02 K 9/24,** B 29 C 39/10

(21) Numéro de dépôt: **84402599.9**

(22) Date de dépôt: **14.12.84**

(54) **Procédé et dispositif d'inhibage des faces d'extrémité d'un bloc de propergol.**

(30) Priorité: **29.12.83 FR 8320991**

(43) Date de publication de la demande:
**04.09.85 Bulletin 85/36**

(45) Mention de la délivrance du brevet:
**10.08.88 Bulletin 88/32**

(84) Etats contractants désignés:
**BE DE FR GB IT**

(56) Documents cité:
**EP-A-0 029 491**
**BE-A-669 049**

(73) Titulaire: **SOCIETE NATIONALE DES POUDRES ET EXPLOSIFS, 12, quai Henri IV, F-75181 Paris Cédex 04 (FR)**

(72) Inventeur: **Hiss, André, 6 rue Clément Ader, F-33160 Saint- Medard en Jalles (FR)**
Inventeur: **Hivert, Michel, 5 avenue Carnot, F-33700 Merignac (FR)**
Inventeur: **Tauzia, Jean- Michel, 26, rue du Queyron Caychac, F-33290 Blanquefort (FR)**

LIBER, STOCKHOLM 1988

## Description

L'invention concerne un procédé et un dispositif d'inhibage des faces d'extrémité d'un bloc de propergol, par exemple, un bloc comprenant un canal central.

On sait déjà réaliser l'inhibage des faces latérales d'un bloc de propergol. Cette technique est par exemple décrite dans le brevet BE-A-669 049.

On sait également réaliser l'inhibage des faces d'extrémité d'un bloc comportant un canal central. Toutefois, les procédés connus jusqu'à ce jour présentent de nombreux inconvénients. Par exemple, un de ces procédés consiste à disposer le bloc de propergol dans une chemise ou moule, le canal central étant également obturé, et de couler sur la face d'extrémité, une quantité déterminée de composition inhibitrice. Après polymérisation de la composition et démoulage, il est nécessaire d'usiner la couche ainsi produite. En effet, les bords de la couche inhibitrice présentent une surépaisseur due à l'effet de ménisque de la composition liquide coulée dans le moule. De manière générale, les procédés connus requièrent de nombreuses et difficiles manipulations du bloc, ou demandent une opération de finition de la couche inhibitrice tel qu'un usinage après durcissement de celle-ci, pour obtenir un état de surface correct du bloc. Néanmoins, cet usinage final, souvent réalisé manuellement, ne permet pas d'obtenir un état de surface correct et augmente considérablement le coût de fabrication du bloc. De plus, les différents procédés connus ne permettent pas d'inhiber des blocs de propergol à combustion radiale, selon une cadence de production compatible avec une fabrication industrielle, tant d'un point de vue de la durée de fabrication que de la main d'oeuvre nécessaire.

Pour remédier notamment à ces inconvénients, l'invention propose un procédé et un dispositif d'inhibage des faces d'extrémité d'un bloc de propergol permettant d'une part de simplifier et réduire les manipulations du bloc pendant l'inhibage, et d'autre part de supprimer l'usinage final de la couche inhibitrice. Ainsi, le procédé d'inhibage d'un bloc de propergol et notamment d'un bloc comprenant un canal central peut être en majeure partie et même totalement automatisé.

A cet effet, le procédé de l'invention consiste à couler dans une partie d'un moule ayant une configuration conjuguée à celle de la face à inhiber du bloc et une profondeur égale à l'épaisseur de la couche inhibitrice à former, une quantité déterminée suffisante pour former la couche inhibitrice sur une face d'extrémité, puis à mettre en contact la face à inhiber du bloc avec la surface de la composition inhibitrice coulée. On réalise enfin une polymérisation au moins partielle de la composition coulée pour permettre le démoulage de l'ensemble constitué par le bloc de propergol et la composition inhibitrice au moins partiellement polymérisée.

La quantité déterminée de composition inhibitrice coulée est égale environ à la quantité nécessaire de composition pour former la couche inhibitrice; avantageusement, cette quantité déterminée de composition inhibitrice coulée correspondant à environ 110 % de ladite quantité nécessaire.

La couche inhibitrice ainsi formée a sa surface définie par les bords du moule et donc un état de surface propre et net. Par ailleurs comme la quantité coulée correspond sensiblement à la quantité nécessaire pour la formation de la couche, le procédé diminue la quantité de produit mise en oeuvre.

Selon une autre caractéristique de l'invention, la composition inhibitrice coulée est répartie sensiblement uniformément dans le moule pour éviter ainsi la formation de balles et avoir une bonne répartition de la composition inhibitrice sur toute la face du bloc.

Avec le procédé de l'invention, il est possible d'utiliser des compositions inhibitrices de viscosité élevée, telles que, par exemple, des compositions chargées avec des fibres. Toutefois, le procédé est particulièrement avantageux pour l'utilisation de compositions inhibitrices relativement fluides, dont la viscosité est de l'ordre d'une centaine à plusieurs centaines de poises.

L'invention a également pour objet un dispositif pour la mise en oeuvre du procédé décrit ci-dessus, selon les caractéristiques de la revendication 5.

Ce dispositif comprend notamment un moule et des moyens de coulée de la composition inhibitrice sur le moule. Le moule comprend sur sa face supérieure un évidement, en forme de goulotte, de forme conjuguée à celle de la face du bloc à inhiber et de profondeur égale à l'épaisseur de la couche inhibitrice à former, les bords de ladite goulotte comportant des arêtes vives.

Selon une autre caractéristique de l'invention, les bords externes de la goulotte sont formés de telle manière que le bloc de propergol repose sur lesdits bords au niveau de sa couche inhibitrice latérale, pour ainsi obtenir une épaisseur constante de la couche inhibitrice sur la face d'extrémité.

De plus, une rainure est formée autour des bords de la goulotte pour permettre l'écoulement du surplus de la composition inhibitrice lors de la pose du bloc sur les bords de la goulotte. Cette rainure permet, en combinaison avec les arêtes vives des bords, d'éviter la formation de bavure. Ainsi, le produit final obtenu a une surface nette, ne nécessitant aucune finition par usinage.

Par ailleurs, le moule comprend des moyens de centrage du bloc pour le positionner aisément, et rapidement.

Les moyens de coulée de la composition inhibitrice comprennent un dispositif d'alimentation de la composition inhibitrice et une tête de distribution permettant d'alimenter la composition sur, sensiblement, toute la surface de la goulotte du moule.

Ainsi, avec ce dispositif, il est possible de doser la quantité de composition coulée et d'automatiser l'alimentation de la composition inhibitrice.

D'autres caractéristiques, avantages et détails de l'invention apparaîtront plus clairement au vu de la description détaillée qui va suivre et des dessins annexés donnés uniquement à titre d'exemple et dans lesquels:

- les figures 1a, 1b, 1c illustrent schématiquement, et à titre d'exemple, des formes d'inhibage réalisables avec le procédé de l'invention,

- la figure 2 est une vue en perspective de dessus d'un premier mode de réalisation du moule selon l'invention pour former les couches d'inhibage illustrées aux figures 1a, 1b,

- la figure 3 est une vue en perspective de dessus d'un second mode de réalisation du moule selon l'invention pour former la couche d'inhibage illustrée à la figure 1c,

- la figure 4 est une vue en coupe selon la ligne IV-IV de la figure 2,

- la figure 5 est une vue en coupe selon la ligne V-V de la figure 3,

- la figure 6 est un schéma synoptique des moyens de coulée de la composition inhibitrice sur le moule; et

- la figure 7 est une vue schématique en coupe partielle des moyens de distribution de la composition inhibitrice sur le moule.

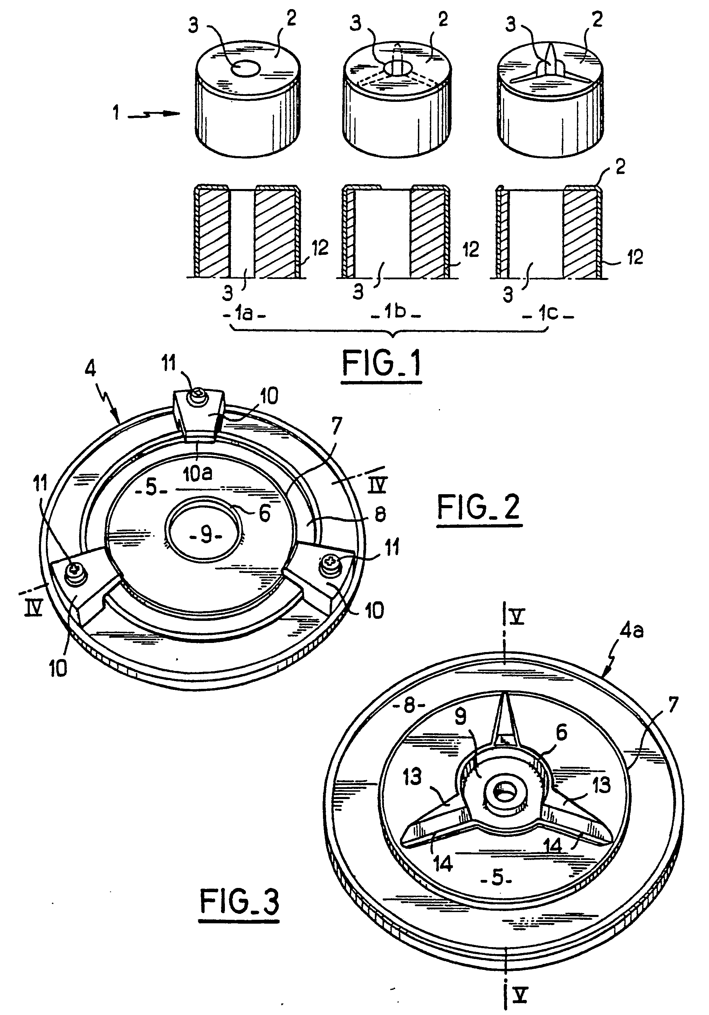

Pour illustrer et décrire le procédé de l'invention, on donnera ci-dessous, à titre d'exemple, une description du dispositif et du mode opératoire permettant de former les couches d'inhibage illustrées aux figures 1a, 1b, et 1c.

Les figures 1a, 1b représentent un inhibage en couronne notamment utilisé pour l'inhibage des faces d'extrémité d'un bloc 1 comprenant un canal 3 central de section cylindrique ou quand on désire simplement laisser une ouverture cylindrique dans la couche inhibitrice 2.

La figure 1c représente un inhibage en forme d'étoile utilisé pour un bloc 1 comportant un canal central 3 à section en étoile.

Bien entendu, ces formes d'inhibage sont donnés uniquement à titre d'exemple. Il est en effet, également possible avec le procédé de l'invention, d'inhiber les faces d'extrémité de blocs ayant des formes de canal central diverses ou des faces d'extrémité à surface convexe, ou d'inhiber partiellement ces faces.

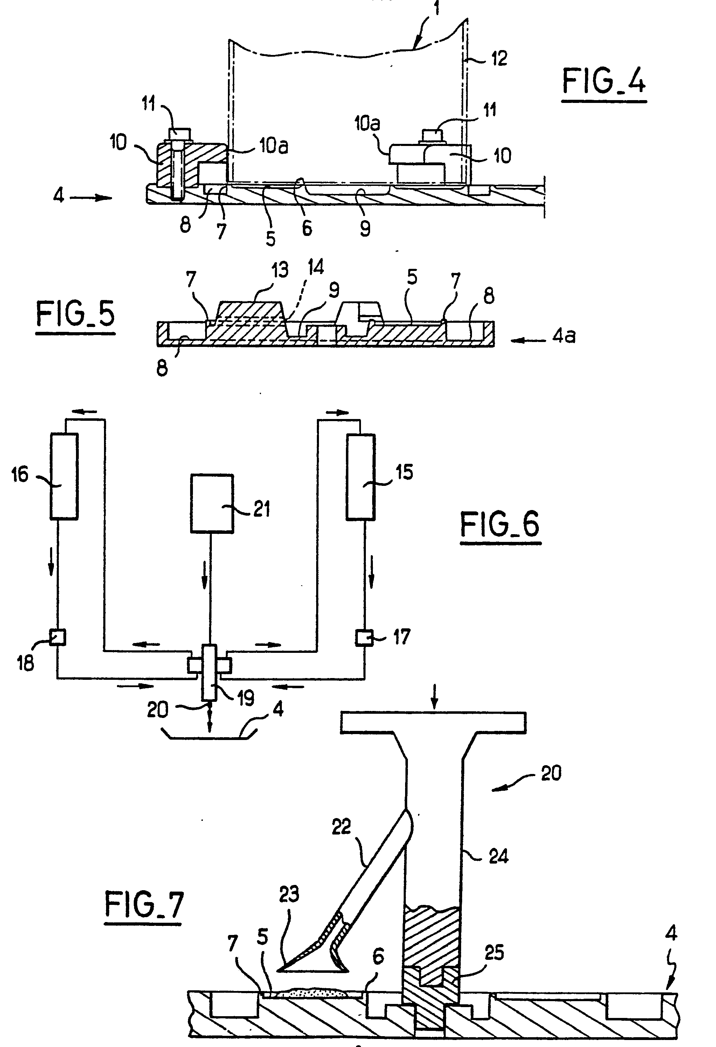

On décrira, en se référant aux figures 2 et 4, la réalisation d'un inhibage en couronne tel que représenté aux figures 1a, 1b, conformément au procédé de l'invention.

Le moule 4 est constitué par un disque métallique présentant sur sa face supérieure un évidement 5 de forme conjuguée à celle de la face à inhiber, en d'autres termes cet évidement a la forme et les dimensions de la couche inhibitrice à former. Dans le cas représenté, cet évidement 5 a une forme annulaire et définit une goulotte délimitée par des rebords 6, 7.

Pour obtenir un contour net et propre de la couche inhibitrice 2, après démoulage, les rebords 6, 7 possèdent des arêtes vives formant couteau.

De plus, pour permettre un écoulement et une évacuation de la composition inhibitrice en excès au delà des rebords 6, 7, la face supérieure du moule comprend des rainures 8, 9 formées autour de chaque rebord 6, 7.

Ainsi, l'excès de composition inhibitrice s'écoulera dans les rainures 8, 9 et ne sera plus en contact avec la composition inhibitrice formant la couche 2. Donc, ces dispositions, à savoir rainures et rebords avec arêtes vives formant couteau, permettent d'obtenir une couche 2 inhibitrice après démoulage présentant un état de surface net, sans bavure ou surépaisseur de matière.

Par ailleurs, des moyens de centrage du bloc sont prévus sur le moule. Ces moyens de centrage dans l'exemple illustré sont constitués par des plots 10 montés sur le disque 4 par des boulons 11, et comprenant des surfaces de guidage et centrage 10a.

On coule donc tout d'abord une quantité déterminée de composition inhibitrice dans la goulotte 5, cette goulotte ayant une profondeur sensiblement égale à l'épaisseur de la couche 2 inhibitrice à former.

Pour obtenir une couche 2 d'épaisseur sensiblement homogène et pour éviter d'emprisonner des bulles d'air, on étale sensiblement uniformément une quantité déterminée de composition inhibitrice sur toute la surface de la goulotte 5 correspondant à environ 110 % de la quantité nécessaire pour constituer la couche 2.

De plus, pour faciliter la répartition de la composition dans la goulotte 5, et éviter l'emprisonnement de bulles d'air, il est avantageux d'utiliser une composition inhibitrice relativement fluide telle que, par exemple, une composition en résine époxy de viscosité comprise entre 150 et 200 poises environ. Toutefois, il est également possible de répartir dans le moule 4 une composition inhibitrice visqueuse constituée par exemple par une résine polymérisable chargée avec des fibres.

Le bloc 1 est ensuite introduit entre les faces de guidage 10a des plots 10, jusqu'à une position telle que la face d'extrémité à inhiber vient en contact avec la surface de la composition inhibitrice coulée.

Dans cette position, représentée à la figure 4 en traits mixtes, le bloc repose sur les rebords 6, 7.

Avantageusement pour obtenir une épaisseur constante de la couche inhibitrice sur toute la face du bloc de propergol, le bloc 1 repose sur les rebords 6, 7 au niveau de la couche inhibitrice 12 latérale du bloc, formée auparavant.

On laisse ensuite durcir la composition inhibitrice jusqu'à un degré de durcissement ou polymérisation permettant un démoulage du bloc et une manipulation de celui-ci, par exemple un retournement ou un transport dans une étuve pour un traitement thermique ultérieur, sans risque de déformation, notamment par fluage, de la couche 2 ainsi formée.

Par exemple, pour une composition inhibitrice à base de polymère Epoxyde, on laisse polymériser la composition à 20°C pendant 6 à 8 heures ou à 40°C pendant 3 heures.

Après le démoulage de l'ensemble constitué par le bloc de propergol et la composition inhibitrice partiellement polymérisée, la polymérisation de la couche inhibitrice est complétée par un traitement thermique approprié, tel qu'un séjour à température ambiante pendant 4h, ou une post-cuisson à 40°C pendant 2h.

Dès que le bloc 1 est démoulé, il est possible de couler une nouvelle quantité de composition inhibitrice dans la goulotte 5 et d'amener sur le moule un nouveau bloc, ou le même bloc retourné pour inhiber son autre face d'extrémité.

Dans le cas d'un inhibage en forme d'étoile, comme illustré à la figure 1c, le moule 4a utilisé, représenté aux figures 3, 5 diffère du moule décrit ci-dessus, en ce que des nervures 13 de forme conjuguée aux branches de l'étoile du canal central du bloc 1, sont formées dans la goulotte 5. Ces nervures comprennent sensiblement au niveau du bord supérieur des rebords 6, 7, un méplat 14 à arête vive formant couteau. Par ailleurs, comme le bloc sera guidé et centré lors de sa mise en place par les nervures 13, il n'est plus nécessaire de prévoir les plots de guidage 10.

En outre, pour faciliter le démoulage du bloc, il est avantageux de revêtir la face supérieure du moule 4, 4a avec une matière n'adhérent pas à la composition inhibitrice, tel que, par exemple du téflon.

Donc le procédé de l'invention permet de réaliser l'inhibage des faces d'extrémité d'un bloc avec un appareillage très simple et un minimum de perte de matière tout en produisant des articles ne demandant aucun traitement de surface pour leur finition.

De plus, il est possible d'automatiser au moins en majeure partie ce procédé en réalisant une installation comprenant des moyens automatiques de manutention des blocs pour les amener sur et les enlever de dessus le moule, et des moyens de coulée de la composition inhibitrice sur le moule.

Les moyens automatiques de manutention sont bien connus de l'homme de métier concerné et peuvent être constitués par des robots, par exemple.

Quant aux moyens de coulée, on décrira ci-dessous et en se référant aux figures 6 et 7, un dispositif préféré de l'invention.

Ces moyens de coulée comprennent un dispositif d'alimentation de la composition inhibitrice, représenté à la figure 6, et un dispositif de distribution illustré à la figure 7.

Le dispositif d'alimentation illustré dans l'exemple, comprend deux réservoirs 15, 16 comportant respectivement la résine et l'accélérateur de la composition inhibitrice d'une part, et le durcisseur, d'autre part. Ces deux réservoirs sont reliés à travers des pompes à engrenages 17, 18 respectivement à une tête de mélange 19, permettant de mélanger les deux produits, et d'alimenter le mélange produit à travers le dispositif de distribution 20 dans le moule 4.

Quand l'orifice de distribution de la tête de mélange 19 est fermée, les produits circulent dans l'installation en circuit fermé ce qui maintient une homogénéité de ceux-ci.

Le dosage de la quantité alimentée est effectuée par les pompes à engrenages 17, 18 qui sont à débit constant et par la durée d'ouverture de l'orifice de distribution de la tête de mélange 19.

Le dispositif d'alimentation peut comprendre également un circuit de rinçage 21 de la tête de mélange.

Le mélange délivré par la tête de mélange est alimenté dans une buse ou tête de distribution 20 illustrée à la figure 7, constituée par un tube 22 ayant une extrémité 23 avec un profil en bec papillon adaptée pour une distribution de la composition sur presque la totalité de la largeur de la goulotte 5, la largeur du bec papillon étant légèrement inférieure à celle de la goulotte 5. De plus, le profil de cette buse permet l'éclatement des bulles d'air résiduelles dans la composition sortant de la tête de mélange.

Cette buse de distribution 22 est fixée sur un arbre support 24, sur une extrémité duquel peut être monté en rotation le moule 4 par un embout 25 à roulement ou analogue.

Ainsi, pour l'alimentation de la composition, un moule 4 est monté sur l'arbre 24 par l'embout 25, l'extrêmité 23 de la buse de distribution étant en regard de la goulotte 5 du moule 4 à remplir. Le moule 4 est mis en rotation pendant l'alimentation de la composition inhibitrice pour répartir cette dernière sur toute la surface de la goulotte 5.

Quand l'alimentation de la composition est terminée, le moule 4 est transporté à un autre poste de travail pour la mise en place du bloc à inhiber.

Dans une telle chaîne de fabrication, le temps d'occupation des moules est uniquement déterminé par la durée de polymérisation de la composition inhibitrice avant le démoulage du bloc 1.

Donc, avec un tel dispositif, on peut soit travailler en marche manuelle, soit de manière totalement automatique en programmant des injections de composition quand le moule 4 est mis en place sous la buse de distribution.

Le procédé de l'invention permet donc de produire d'une part, des produits finis de très bonne qualité sans nécessiter d'opérations de finition tel qu'un usinage de la surface de la couche inhibitrice, et, d'autre part, de réaliser une production automatique à cadence industrielle, et en conséquence d'abaisser considérablement le prix de revient de fabrication des blocs.

Les procédé et dispositif de l'invention permettent l'inhibage de blocs de propergol constitués par une composition propulsive quelconque, et quelle que soit la nature de la composition inhibitrice et sa viscosité. Toutefois, dans le cas d'une composition inhibitrice visqueuse, par exemple une résine chargée avec des fibres, il est fréquemment utile de réaliser une finition de l'état de surface de l'inhibiteur, par exemple un ébavurage des arêtes du bloc, la composition inhibitrice pouvant être alimentée dans le moule avec la tête de dis tribution 20 décrite ci-dessus.

De plus, les blocs de propergol peuvent être des blocs pleins ou des blocs à canal central de forme quelconque.

**Revendications**

1. Procédé d'inhibage des faces d'extrêmité d'un bloc de propergol par une composition inhibitrice polymérisable, caractérisé en ce qu'il consiste à couler dans une partie (5) d'un moule (4) ayant une configuration conjuguée à celle de la face à inhiber du bloc (1) et une profondeur égale à l'épaisseur de la couche inhibitrice à former, une quantité déterminée suffisante pour former la couche inhibitrice sur une face d'extrémité, puis à mettre en contact ladite face à inhiber du bloc (1) avec la surface de la composition inhibitrice coulée, et à réaliser une polymérisation au moins partielle de ladite composition pour permettre le démoulage de l'ensemble constitué par le bloc de propergol et la composition inhibitrice au moins partiellement polymérisée.

2. Procédé selon la revendication 1, caractérisé en ce que la quantité déterminée précitée de composition inhibitrice coulée est égale à la quantité nécessaire de composition inhibitrice pour former la couche inhibitrice (2) de la face d'extrémité du bloc précitée.

3. Procédé selon la revendication 1, caractérisé en ce que la quantité déterminée précitée de composition inhibitrice coulée est égale à environ 110 % de la quantité nécessaire de composition inhibitrice pour former la couche inhibitrice (2) de la face d'extrémité du bloc précitée.

4. Procédé selon l'une des revendications précédentes, caractérisé en ce que la composition inhibitrice est répartie sensiblement uniformément dans la partie (5) précitée du moule.

5. Dispositif pour la mise en oeuvre du procédé selon l'une des revendications précédentes comprenant un moule (4) muni sur sa face supérieure d'un évidement (5) en forme de goulotte de forme conjuguée à celle de la face 6 inhiber du bloc (1) et de moyens de centrage du bloc (1) caractérisé en ce qu'il comprend également des moyens de coulée de la composition inhibitrice dans ledit moule et en ce que des rainures sont formées autour des rebords (7, 6) de la goulotte dont la profondeur est égale à l'épaisseur de la couche inhibitrice (2) à former.

6. Dispositif selon la revendication 5 caractérisé en ce que des nervures (13) sont formées dans la goulotte (5) précitée pour les moules d'inhibage de bloc à canal central en étoile.

7. Dispositif selon l'une des revendications 5 ou 6, caractérisé en ce que les moyens de coulée précités comprenant notamment une tête de distribution de la composition dans la goulotte, constituée par un tube de distribution (22) à extrémité (23) adaptée en forme de bec papillon de largeur légèrement inférieure à celle de la goulotte (5).

8. Dispositif selon la revendication 7, caractérisé en ce que la tête de distribution (22) est fixée à un arbre (24), le moule étant monté en rotation autour dudit arbre (24).

**Patentansprüche**

1. Verfahren zum Schützen der Stirnseiten eines Propergolblocks mit einer polymerisierbaren Schutzmasse, gekennzeichnet durch Gießen einer bestimmten, für die Bildung der Schutzschicht auf einer Stirnseite ausreichenden Menge an Schutzmasse in einen Teil (5) einer Form (4), die eine der zu schützenden Seite des Blocks (1) entsprechende Konfiguration und eine der Dicke der zu bildenden Schutzschicht entsprechende Tiefe aufweist, Inberührungbringen der zu schützenden Seite des Blocks (1) mit der Oberfläche der gegossenen Schutzmasse und zumindest teilweises Polymerisieren der Schutzmasse, um die Kombination von Propergolblock und zumindest teilpolymerisierter Schutzmasse aus der Form entfernen zu können.

2. Verfahren nach Anspruch 1, dadurch gekennzeichnet, daß die vorbestimmte Menge an eingegossener Schutzmasse gleich der für die Bildung der Schutzschicht (2) auf der Stirnseite des Blocks notwendigen Menge an Schutzmasse ist.

3. Verfahren nach Anspruch 1, dadurch gekennzeichnet, daß die vorbestimmte gegossene Menge an Schutzmasse gleich etwa 110 % der zur Bildung der Schutzschicht (2) auf der Stirnseite des Blocks notwendigen Menge an Schutzmasse ist.

4. Verfahren nach einem der vor stehenden Ansprüche, dadurch gekennzeichnet, daß die Schutzmasse im wesentlichen gleichmäßig im Teil (5) der Form verteilt wird.

5. Vorrichtung zur Durchführung des Verfahrens nach einem der vorstehenden Ansprüche mit einer Form (4), die auf ihrer Oberseite eine Vertiefung (5) in Form einer Ablaufrinne mit einer der zu schützenden Seite des Blocks (1) entsprechenden Form aufweist, und Mittel zur Zentrierung des Blocks (1),

dadurch gekennzeichnet, daß sie außerdem Vorrichtungen zum Gießen der Schutzmasse in die Form und Rillen um die Ränder (7, 6) der Ablaufrinne aufweist, deren Tiefe der Dicke der zu bildenden Schutzschicht (2) entspricht.

6. Vorrichtung nach Anspruch 5, dadurch gekennzeichnet, daß die Vertiefung (5) Rippen (13) für Formen zum Schützen von Blöcken mit sternförmigem Mittelkanal aufweist.

7. Vorrichtung nach einem der Ansprüche 5 und 6, dadurch gekennzeichnet, daß die Vorrichtungen zum Gießen insbesondere einen Verteilerkopf für die Masse in die Vertiefung umfassen, der aus einem Verteilerrohr (22) besteht, dessen Ende (23) die Form eines Gasbrenners aufweist, dessen Breite nur geringfügig kleiner als die der Vertiefung (5) ist.

8. Vorrichtung nach Anspruch 7, dadurch gekennzeichnet, daß der Verteilerkopf (22) an einer Welle (24) befestigt ist, wobei die Form um die Welle (24) drehbar angeordnet ist.

**Claims**

1. Process for inhibiting the end faces of a block of propellant by means of a polymerizable inhibiting composition, characterized in that it consists in casting in a part (5) of a mould (4) having a configuration matching that of the block (1) face to be inhibited and a depth equal to the thickness of the inhibiting layer to be formed, a determined quantity which is sufficient to form the inhibiting layer on one end face, then placing the said block (1) face to be inhibited in contact with the surface of the cast inhibiting composition, and in performing at least a partial polymerization of the said composition to permit the demoulding of the assembly consisting of the block of propellant and the inhibiting composition which is at least partially polymerized.

2. Process according to Claim 1, characterized in that the abovementioned determined quantity of cast inhibiting composition is equal to the quantity of inhibiting composition needed to form the inhibiting layer (2) of the abovementioned end face of the block.

3. Process according to Claim 1, characterized in that the abovementioned determined quantity of cast inhibiting composition is equal to approximately 110 % of the quantity of inhibiting composition needed to form the inhibiting layer (2) of the abovementioned end face of the block.

4. Process according to one of the preceding claims, characterized in that the inhibiting composition is distributed substantially uniformly in the abovementioned part (5) of the mould.

5. Device for implementing the process according to one of the preceding claims, comprising a mould (4) provided on its upper face with a throat-shaped cavity (5) of a shape matching that of the block (1) face to be inhibited and means for centring the block (1), characterized in that it also comprises means for casting the inhibiting composition in the said mould and in that grooves are formed around the edges (7, 6) of the throat whose depth is equal to the thickness of the inhibiting layer (2) to be formed.

6. Device according to Claim 5, characterized in that ribs (13) are formed in the abovementioned throat (5) in the case of the moulds for inhibiting a block with a star-shaped central channel.

7. Device according to either of Claims 5 or 6, characterized in that the abovementioned casting means comprise particularly a head for distributing the composition in the throat, consisting of a distribution tube (22) with an end (23) adapted in the shape of a butterfly nozzle of a width which is slightly smaller than that of the throat (5).

8. Device according to Claim 7, characterized in that the distribution head (22) is fastened to a shaft (24), the mould being mounted capable of rotating around the said shaft (24).

FIG_1

FIG_2

FIG_3

**FIG_4**

**FIG_5**

**FIG_6**

**FIG_7**